Europäisches Patentamt

**European Patent Office**

**Office européen des brevets**

(19)

(11) Veröffentlichungsnummer: **0 139 783**

**A1**

(12) # EUROPÄISCHE PATENTANMELDUNG

(21) Anmeldenummer: **83110883.2**

(22) Anmeldetag: **01.11.83**

(51) Int. Cl.⁴: **B 07 B 13/00**
**B 07 B 15/00, B 03 B 9/06**

(43) Veröffentlichungstag der Anmeldung:
**08.05.85 Patentblatt 85/19**

(84) Benannte Vertragsstaaten:
**AT BE CH DE FR GB IT LI LU NL SE**

(71) Anmelder: **VENTILATORENFABRIK OELDE GMBH**
**Robert-Schumann-Ring**
**D-4740 Oelde(DE)**

(72) Erfinder: **Coxon, Michael**
**Vor den Knaeppen 1**
**D-4740 Oelde 1(DE)**

(74) Vertreter: **Stracke, Alexander, Dipl.-Ing. et al,**
**Patentanwälte Dipl.-Ing. Loesenbeck Dipl.-Ing. Stracke**
**Jöllenbecker Strasse 164 Postfach 5605**
**D-4800 Bielefeld 1(DE)**

(54) Vorrichtung zur Aufbereitung von Schrott, Schutt od. dgl.

(57) Die dargestellte Vorrichtung zur Aufbereitung von Schrott, Schutt od.dgl., z.B. von NE-Schrott, im Sinne einer Trennung in mindestens zwei Komponenten umfaßt mindestens eine gegenüber der Horizontalen geneigt angeordnete Sortierplatte (3) und eine oberhalb der Sortierplatte angeordnete Aufgabeeinrichtung (5) von der aus das Aufbereitungsgut im freien Fall auf die Sortierplatte (3) aufbringbar ist, wobei die Sortierplatte (3) durch mindestens ein Antriebsaggregat sowohl horizontal wie auch vertikal bewegbar ist.

Eine derartige Vorrichtung ist kostengünstig herstellbar und im Dauerbetrieb so gut wie störungsfrei.

Das Aufbereitungsgut wird auf die Sortierplatte aufgebracht, und diese Sortierplatte wird durch ein Antriebsaggregat in eine Schwingungsbewegung versetzt, die eine vertikale und eine horizontale Komponente aufweist. Die Bestandteile des Aufbereitungsgutes werden nun je nach ihrer Beschaffenheit entweder in Neigungsrichtung der Sortierplatte nach unten oder nach oben bewegt und somit in zwei Komponenten getrennt.

EP 0 139 783 A1

Vorrichtung zur Aufbereitung von Schrott, Schutt oder dergleichen.

Die vorliegende Erfindung betrifft eine Vorrichtung zur Aufbereitung von Schrott, Schutt oder dergleichen, z.B. von NE-Schrott,
im Sinne einer Trennung in mindestens 2 Komponenten.

Zur Aufbereitung von Schrott oder Schutt sind verschiedene Verfahren und Vorrichtungen bekannt.

So ist es beispielsweise bekannt, Schrott durch Handverlesung in
gewünschte Bestandteile zu trennen. Es versteht sich von selbst,
daß diese Methode sehr zeitaufwendig und demzufolge teuer und
mühsam durchzuführen ist.

Es sind auch Siebvorrichtungen bekannt, um Schrott oder Schutt aufzubereiten, diese Siebvorrichtungen sind allerdings mit dem Nachteil behaftet, daß die Siebe sich        sehr schnell zusetzen, so
daß die gesamte Vorrichtung sehr störanfällig ist. Sie ist nur in der Lage
eine Trennung    . nach Größe vorzunehmen.

Weiterhin sind Schwimm-Sink-Anlagen bekannt, in denen Schrott oder
Schutt aufgrund unterschiedlicher Dichte aufbereitet werden kann. Derartige Schwimm-Sink-Anlagen sind vergleichsweise sehr teuer, sowohl hinsichtlich ihrer Erstellung wie auch ihres Betriebes. .

Der vorliegenden Erfindung liegt die Aufgabe zugrunde, eine Vorrichtung zu schaffen, die kostengünstig herstellbar und im Dauerbetrieb so gut wie störungsfrei ist.

Diese Aufgabe wird erfindungsgemäß gelöst durch mindestens eine
gegenüber der Horizontalen geneigt angeordnete Sortierplatte
und eine oberhalb der Sortierplatte angeordnete Aufgabeeinrichtung, von der aus das Aufbereitungsgut im freien Fall auf die
Sortierplatte aufbringbar ist, wobei die Sortierplatte durch
mindestens ein Antriebsaggregat sowohl horizontal wie auch
vertikal bewegbar ist.

-2-

Der aufzubereitende Schrott und Schutt wird über die Aufgabeeinrichtung auf die Sortierplatte aufgebracht. Die Sortierplatte wird durch das Antriebsaggregat sowohl horizontal wie
auch vertikal bewegt. Dies führt dazu, daß die Sortierplatte
letztendlich eine Schwingungsbewegung ausführt, die eine vertikale und eine horizontale Komponente aufweist. Die Bestandteile des Aufbereitungsgutes werden nun je nach ihrer Beschaffenheit entweder in Neigungsrichtung der Sortierplatte nach
unten oder nach oben bewegt, so daß schon mit einer Sortierplatte
zwei Komponenten voneinander getrennt werden können. Dabei kann
gesagt werden, daß diejenigen Bestandteile, die entsprechend der
Neigungsrichtung der Sortierplatte nach unten bewegt werden,feste
Bestandteile sind, während weichere Bestandteile entgegen der
Neigungsrichtung der Sortierplatte nach oben bewegt werden.

Bei der Aufbereitung von NE-Schrott, der beispielsweise auch
noch Gummiabfälle, Kabelschrott und dergleichen enthält, werden
die NE-Bestandteile längs der Sortierplatte nach unten und die
Gummiabfälle, der Kabelschrott und dergleichen in die entgegengesetzte Richtung bewegt werden.

Besonders zweckmäßig ist es, mehrere, gleichsinnig geneigte
Sortierplatten übereinander und in Neigungsrichtung treppenförmig gegeneinander versetzt anzuordnen.

Durch diese Maßnahme wird eine Verbesserung des Trenngrades
erreicht.

Es kann zweckmäßig sein, zwischen der Aufgabeeinrichtung und der
obersten Sortierplatte mindestens einen Stabrost anzuordnen.

Dieser Stabrost ermöglicht eine frühzeitige Ausscheidung von
großen Bestandteilen des Aufbereitungsgutes, beispielsweise von
großen Gummi- oder Kabelstücken.

-3-

-3-

Weitere Merkmale der Erfindung sind Gegenstand weiterer
Unteransprüche.

Ein Ausführungsbeispiel ist in den beigefügten Zeichnungen dargestellt und wird im folgenden näher beschrieben:

Fig. 1 Eine schematisch dargestellte Seitenansicht einer
       Vorrichtung zur Aufbereitung von Schrott oder Schutt

Fig. 2 Eine Ansicht in Richtung des Pfeiles II in Fig. 1

Fig. 3 Eine stark schematisierte Seitenansicht der Vorrichtung
       gemäß Fig. 1

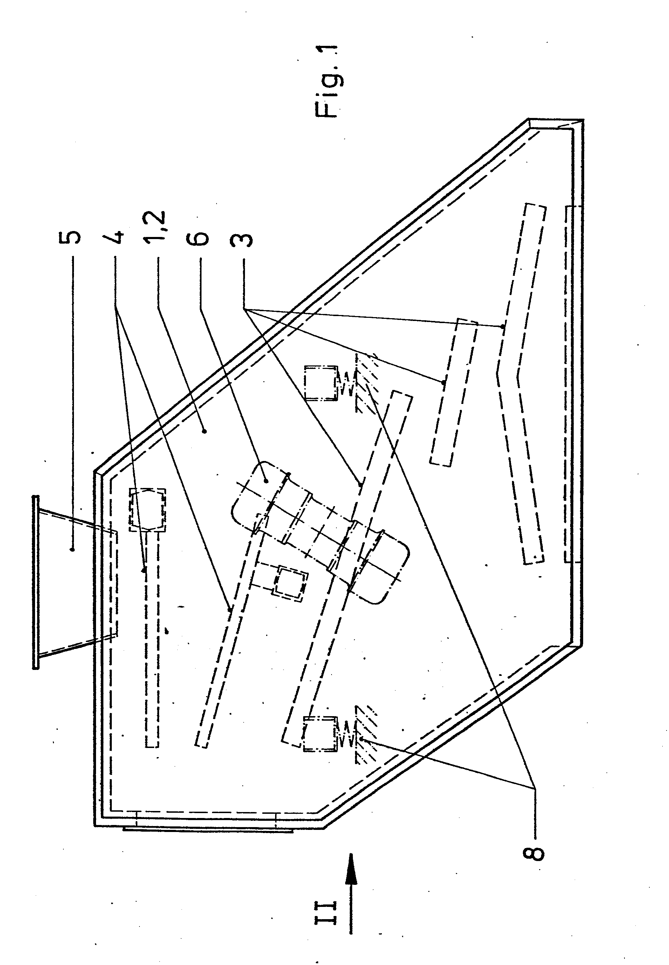

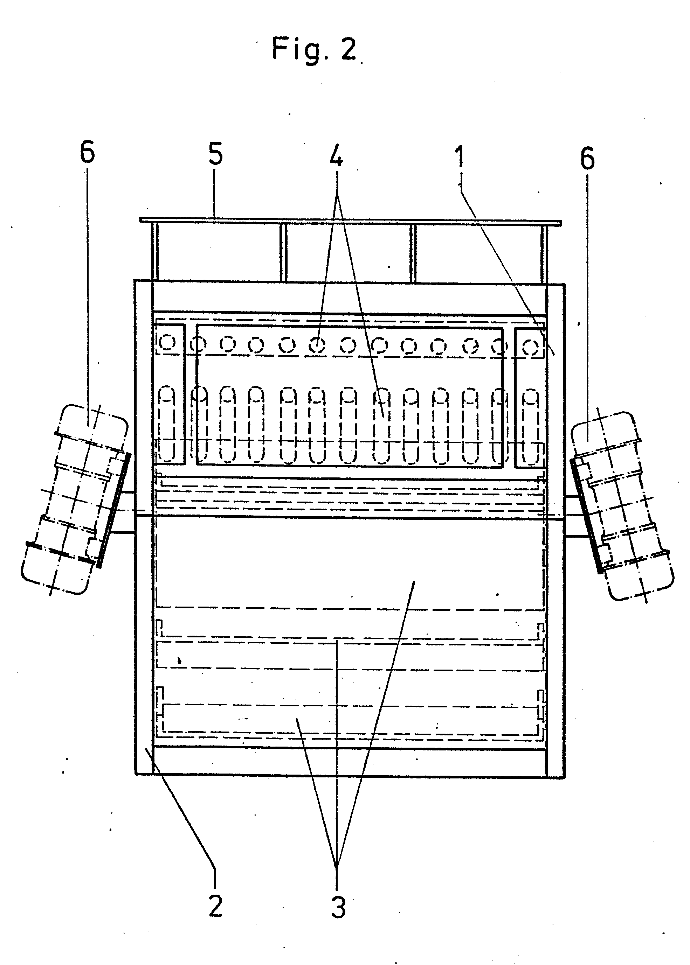

Die in den Figuren 1 + 2 dargestellte Vorrichtung besteht im
wesentlichen aus 2 parallel zueinander verlaufenden Seitenwänden (1) u (2), mehreren Sortierplatten (3), 2 Stabrosten (4),
einer Aufgabeeinrichtung (5) sowie 2 Unwuchtmotoren (6).

Die Sortierplatten (3) sind gegenüber der Horizontalen geneigt
angeordnet. Weiterhin sind die Sortierplatten (3) übereinander
angeordnet, und zwar, was aus Fig. 1 besonders anschaulich hervorgeht, in Neigungsrichtung treppenförmig gegeneinander versetzt.

Die Sortierplatten (3) sind gleichsinnig geneigt angeordnet.
Der Neigungswinkel der einzelnen Sortierplatten (3) kann durchaus unterschiedlich sein.

Als zweckmäßig haben sich Neigungswinkel im Bereich zwischen
5° und 20° herausgestellt.

Die Sortierplatten (3) sind fest mit den Seitenwänden (1) u.(2)
verbunden.

-4-

Das gleiche gilt für die beiden Stabroste (4). Im dargestellten Ausführungsbeispiel ist der obere Stabrost (4) horizontal angeordnet, der untere Stabrost (4) hingegen ist gleichsinnig zu den Sortierplatten (3) geneigt.

Die Rostweite des oberen Stabrostes (4) ist größer als diejenige des unteren Stabrostes (4).

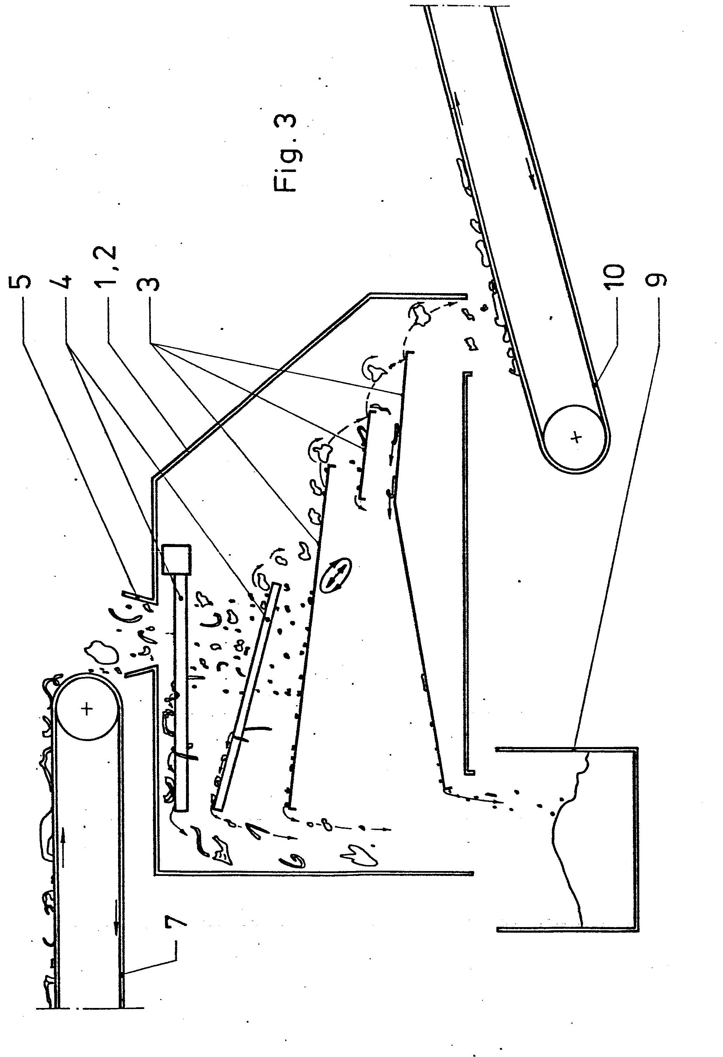

Die Aufgabeeinrichtung (5) besteht im dargestellten Ausführungsbeispiel aus einem Einfülltrichter, der sich über die gesamte Breite der Stabroste (4) und der Sortierplatten (3) erstreckt. Durch diesen Einfülltrichter kann Schrott oder Schutt beispielsweise mittels eines Förderbandes (7) (s. Fig. 3) im freien Fall aufgegeben werden.

Die an den Seitenwänden (1) u 2) angeschlossenen Unwuchtmotoren versetzen die schwingfähig auf Festlagern (8) gelagerten Seitenwände (1) u (2) in eine Schwingbewegung, die beim dargestellten Ausführungsbeispiel als elliptisch bezeichnet werden kann. Gemeinsam mit den Seitenwänden (1) u (2) werden selbstverständlich auch die Stabroste (4) und die Sortierplatten (3) entsprechend in Schwingung versetzt.

Das Aufbereitungsgut wird nun zunächst im Bereich der beiden Stabroste (4) nach Größe vorsortiert. Diejenigen Bestandteile, die die beiden Stabroste (4) nicht passieren können, werden aufgrund der Schwingungsbewegung dieser Stabroste (4) entgegen der Neigungsrichtung des unteren Stabrostes (4) und auch der Sortierplatten (3) transportiert. Die entsprechenden Bestandteile fallen von den Stabrosten (4) ab und können in einem Abfallbehälter (9) aufgefangen werden.

Kleinere Bestandteile des Aufbereitungsgutes gelangen zunächst auf die oberste Sortierplatte (3). Hier findet nun eine erste Trennung von solchen Bestandteilen mit einer geringen inneren Dämpfung und solchen Bestandteile mit einer hohen inneren Dämpfung statt.

0139783

-5-

Die Bestandteile mit geringer innerer Dämpfung, beispielsweise NE-Metalle, werden von der obersten Sortierplatte
in deren Neigungsrichtung abrutschen. Bestandteile mit
hoher innerer Dämpfung hingegen werden durch die Schwingungsbewegung der oberen Sortierplatte (3) entgegen ihrer
Neigungsrichtung nach oben gefördert, bis sie von der besagten Sortierplatte (3) herunterfallen. Diese Bestandteile
gelangen ebenfalls in den bereits erwähnten Abfallbehälter
(9).

Da eine Trennung aller Bestandteile mit geringer und hoher
innerer Dämpfung im Bereich einer Sortierplatte (3) nur unvollkommen möglich ist, sind weitere Sortierplatten vorgesehen.

Diese Sortierplatten (3) sind, worauf schon hingewiesen
wurde, jeweils mit vertikalem Abstand zu der oberen Sortierplatte (3) angeordnet. Außerdem sind diese unteren Sortierplatten (3) in Neigungsrichtung treppenförmig sowohl untereinander wie auch gegenüber der obersten Sortierplatte (3)
versetzt angeordnet.

Das Aufgabegut kann also immer nur von einer zur anderen
Sortierplatte (3) befördert werden. Dabei findet in der
Ebene jeder Sortierplatte (3) eine weitere
Trennung von Bestandteilen mit niedriger und hoher innerer
Dämpfung statt.

Im dargestellten Ausführungsbeispiel wird das Aufbereitungsgut lediglich in 2 Komponenten getrennt, es ist aber auch
ohne weiteres denkbar, das Aufbereitungsgut in mehrere Komponenten aufzuteilen.

-6-

Bei der Aufbereitung von NE-Schrott ist das Ziel, die NE-Bestandteile des Schrottes in möglichst reiner Form zurückzugewinnen. Diese NE-Bestandteile sind solche Bestandteile mit geringer innerer Dämpfung, d. h., diese Bestandteile werden entsprechend der Neigungsrichtung der Sortierplatten (3) nach unten gefördert. Im dargestellten Ausführungsbeispiel gem. Fig. 3 werden die NE-Bestandteile auf ein weiteres Förderband (10) aufgebracht, mittels dessen diese Bestandteile in einen nicht dargestellten Sammelbehälter oder zu einer weiteren Arbeitsstation gefördert werden.

Die einzelnen Sortierplatten (3) können in Abweichung vom dargestellten Ausführungsbeispiel auch jeweils separat angetrieben werden. Das gleiche gilt für die Stabroste (4).

Statt der dargestellten Unwuchtmotoren (6) können als Antriebsaggregate auch Exzenterantriebe verwendet werden.

Es ist möglich, die gesamte Vorrichtung auf einem Fahrgestell abzustützen, womit der große Vorteil erzielt wird, daß die Vorrichtung äußerst mobil und somit an praktisch jedem beliebigen Aufstellort einsetzbar ist.

Es hat sich als vorteilhaft herausgestellt, die Unwuchtmotoren (6) gegenüber der Vertikalen geneigt anzuordnen, was Fig. 2 sehr anschaulich zeigt. Die Fig. 2 zeigt auch deutlich, daß die Unwuchtmotoren (6) gegeneinander geneigt sind.

Es ist sinnvoll, die Antriebsaggregate so auszulegen, daß für die Sortierplatten (3) und die Stabroste (4) Schwingungen mit Amplituden im Bereich von 7 - 14 mm erreicht werden.

Patentansprüche

================

1. Vorrichtung zur Aufbereitung von Schrott, Schutt oder dergleichen, z. B. von NE-Schrott, im Sinne einer Trennung in mindestens 2 Komponenten, gekennzeichnet durch mindestens eine gegenüber der Horizontalen geneigt angeordnete Sortierplatte (3) und eine oberhalb der Sortierplatte angeordnete Aufgabeeinrichtung (5), von der aus das Aufbereitungsgut im freien Fall auf die Sortierplatte (3) aufbringbar ist, wobei die Sortierplatte (3) durch mindestens ein Antriebsaggregat sowohl horizontal wie auch vertikal bewegbar ist.

2. Vorrichtung nach Anspruch 1, dadurch gekennzeichnet, daß mehrere, gleichsinnig geneigte Sortierplatten (3) übereinander und in Neigungsrichtung treppenförmig gegeneinander versetzt angeordnet sind.

3. Vorrichtung nach Anspruch 1 oder 2, dadurch gekennzeichnet, daß zwischen der Aufgabeeinrichtung (5) und der obersten Sortierplatte (3) mindestens ein Stabrost (4) angeordnet ist.

4. Vorrichtung nach Anspruch 3, dadurch gekennzeichnet, daß der Stabrost (4) ebenso wie die Sortierplatte (3) antreibbar ist.

5. Vorrichtung nach einem oder mehreren der vorhergehenden Ansprüche, dadurch gekennzeichnet, daß der Stabrost (4) im gleichen , oder im entgegengesetzten Sinne geneigt ist wie die Sortierplatte (3).

6. Vorrichtung nach einem oder mehreren der vorhergehenden Ansprüche, dadurch gekennzeichnet, daß 2 Stabroste (4) übereinander angeordnet sind, wobei die Rostweite des oberen Stabrostes (4) größer ist als die des unteren Stabrostes (4).

7. Vorrichtung nach Ansprch 6, dadurch gekennzeichnet, daß der obere Stabrost (4)                und der untere Stabrost (4) zueinander                geneigt angeordnet sind.

8. Vorrichtung nach einem oder mehreren der vorhergehenden Ansprüche, dadurch gekennzeichnet, daß die Sortierplatte (3) bzw. die Sortierplatten (3) und die  Stabroste (4) zwischen 2 Seitenwänden (1 u 2) angeordnet und mit diesen fest verbunden sind und daß die Seitenwände (1 u 2) durch das Antriebsaggregat antreibbar sind.

9. Vorrichtung nach einem oder mehreren der Ansprüche 2 - 7, dadurch gekennzeichnet, daß alle Sortierplatten (3) und Stabroste (4) unabhängig voneinander antreibbar sind.

10. Vorrichtung nach einem oder mehreren der vorhergehenden Ansprüche, dadurch gekennzeichnet, daß als Antriebsaggregat Unwuchtmotoren (6) vorgesehen sind.

11. Vorrichtung nach einem oder mehreren der Ansprüche 1 - 9, dadurch gekennzeichnet, daß als Antriebsaggregat Exzenterantriebe vorgesehen sind.

12. Vorrichtung nach einem oder mehreren der vorhergehenden Ansprüche, dadurch gekennzeichnet, daß ein Fahrgestell vorgesehen ist, auf dem die gesamte Vorrichtung aufgebaut ist.

13. Vorrichtung nach einem oder mehreren der vorhergehenden Ansprüche, dadurch gekennzeichnet, daß der Neigungswinkel der Sortierplatten (3)                          zwischen 5 und 20° beträgt.

14. Vorrichtung nach einem oder mehreren der vorhergehenden Ansprüche, dadurch gekennzeichnet, daß die Amplitude der Schwingungen, in welche die Sortierplatten (3) und die Stabroste (4) versetzbar sind, zwischen 7 und 14 mm beträgt.

15. Vorrichtung nach einem oder mehreren der vorhergehenden Ansprüche, dadurch gekennzeichnet, daß die Sortierplatten (3) und die Stabroste (4) in eine elliptische Schwingung versetzbar sind.

16. Vorichtung nach einem oder mehreren der Ansprüche 1 - 14, dadurch gekennzeichnet, daß die Sortierplatten (3) und die Stabroste (4) in eine lineare Schwingung versetzbar sind.

17. Vorrichtung nach Anspruch 10 dadurch gekennzeichnet, daß die Unwuchtmotoren parallel zueinander oder gegeneinander geneigt angeordnet sind.

Fig. 1

II →

5

4

1,2

6

3

8

0139783

Fig. 2

Fig. 3

0139783

Europäisches
Patentamt

EUROPÄISCHER RECHERCHENBERICHT

0139783
Nummer der Anmeldung

EP 83 11 0883

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 267 037  (K. MERZ et al.)<br><br>* Spalte 1, Zeilen 5-48; Spalte 2, Zeile 31 - Spalte 3, Zeile 2; Spalte 3, Zeilen 29-34; Spalte 4, Zeilen 33-47; Figuren 1,6 *<br><br>--- | 1,2,8, 13 | B 07 B 13/00<br>B 07 B 15/00<br>B 03 B 9/06 |
| X | FR-A-2 407 676  (TOBACCO RESEARCH)<br><br>* Seite 1, Zeile 25 - Seite 2, Zeile 40; Figur 1 *<br><br>--- | 1,3-5, 8,11, 13,14 | |
| X | US-A-4 009 833  (D. LITT et al.)<br>* Spalte 1, Zeile 57 - Spalte 2, Zeile 5; Spalte 2, Zeile 29 - Spalte 3, Zeile 14; Figuren 1,2 *<br><br>--- | 1 | |
| A | GB-A- 712 148  (R. SAMESCH et al.)<br><br>* Seite 1, Zeilen 13-24; Seite 1, Zeile 81 - Seite 2, Zeile 55; Seite 2, Zeilen 114-130; Seite 3, Zeilen 17-62; Figuren 1,4 *<br><br>--- | 1,2,8, 10,15, 16 | **RECHERCHIERTE SACHGEBIETE (Int. Cl. ³)**<br><br>B 07 B<br>B 03 B<br>C 22 B<br>H 01 B<br>H 01 M |
| A | DERWENT PUBLICATIONS LTD., Woche D35, 7. Oktober 1981, London, GB;<br>& SU - A - 784 955 (KURSK AGRICINST) 17.12.1980<br><br>--- -/- | 1-4,8 | |

Der vorliegende Recherchenbericht wurde für alle Patentansprüche erstellt.

| Recherchenort | Abschlußdatum der Recherche | Prüfer |
|---|---|---|
| DEN HAAG | 10-07-1984 | LAVAL J.C.A |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

0139783

Nummer der Anmeldung

EP  83 11 0883

Europäisches
Patentamt

**EUROPÄISCHER RECHERCHENBERICHT**

| **EINSCHLÄGIGE DOKUMENTE** | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | PATENTS ABSTRACTS OF JAPAN, Band 1, Nr. 89, 18. August 1977, Seite 2342M77; & JP - A - 52 33369 (KAWASAKI JUKOGYO K.K.) 14.03..1977 | 1,2 | |
| A | DERWENT PUBLICATIONS LTD., Woche K31, 14. September 1983, London, GB; & SU - A - 961 789 (SECOND RESOURCE PLN) 30.09.1982 | 3,6 | |
| A | GB-A-2 109 707   (NORTH ENGINEERING) | | |
| A | DE-A-2 928 886   (VYZKUMNY) | | |

- - - - -

|  |  | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 10-07-1984 | LAVAL J.C.A |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument

EPA Form 1503 03 82